Europäisches Patentamt

European Patent Office

Office européen des brevets

(11) Publication number: **0 181 048**
**B1**

# EUROPEAN PATENT SPECIFICATION

(45) Date of publication of patent specification: **18.10.89**

(51) Int. Cl.⁴: **A 01 K 43/00**

(21) Application number: **85201826.6**

(22) Date of filing: **08.11.85**

(54) Method and apparatus for washing eggs.

(30) Priority: **09.11.84 NL 8403431**

(43) Date of publication of application:
**14.05.86 Bulletin 86/20**

(45) Publication of the grant of the patent:
**18.10.89 Bulletin 89/42**

(84) Designated Contracting States:
**BE DE FR GB IT NL**

(56) References cited:
**US-A-2 302 809**
**US-A-2 750 293**
**US-A-3 024 793**
**US-A-3 041 212**

(73) Proprietor: **van der Avoird, Johannes**
**Steeuwichtweg 15**
**NL-5406 PP Uden (NL)**

(72) Inventor: **van der Avoird, Johannes**
**Steeuwichtweg 15**
**NL-5406 PP Uden (NL)**

(74) Representative: **Lips, Hendrik Jan George, Ir.**
**et al**
**HAAGSCH OCTROOIBUREAU Breitnerlaan 146**
**NL-2596 HG Den Haag (NL)**

Courier Press, Leamington Spa, England.

# Description

The invention relates to a method for operating an apparatus for washing eggs, with which the egg shells are stripped as much as possible of dirt contaminated with infection causing bacteria, indicated with the so-called germination number, said apparatus comprising a washing drum, an open device into which the eggs to be washed are positioned, means for supplying washing liquid to said drum, for removing said liquid out of it and for heating said washing liquid, said open, eggs containing, device being rotatably supported in said drum and means being present for rotating said device.

Such a method and apparatus are known from US-A-2,302,809. In case of this known method and apparatus the eggs containing device is moved upwardly out of the washing liquid after washing of the eggs and said device is moved to a rotary table onto which the device is positioned so that by means of a fan a blast of air can be blown against said device and the eggs in it for drying the eggs. So an additional handling of the device with the eggs is required and during movement of the eggs from said drum to said rotary table where the eggs are dried, the eggs are exposed to fluctuations of temperature by which the penetration of bacteria into the eggs is made easier.

According to the invention it now is provided that after washing of the eggs and removing the liquid out of said washing drum the open, eggs containing, device is continued to rotate for another 1 to 2 minutes for drying the eggs.

For elucidation of the invention an example will be described with reference to the drawing.

In the drawing:

Fig. 1 shows a perspective view of the automatic washing apparatus with the washing drum into which the device according to the invention can be positioned;

Fig. 2 shows a perspective view of some platforms with eggs, positioned in an inner frame;

Fig. 3 shows a cross-section along the line III-III of Fig. 2;

Fig. 4 shows a perspective view of the inner frame of the device;

Fig. 5 shows a perspective view of the outer frame of the device;

Fig. 6 shows the control diagram of the apparatus.

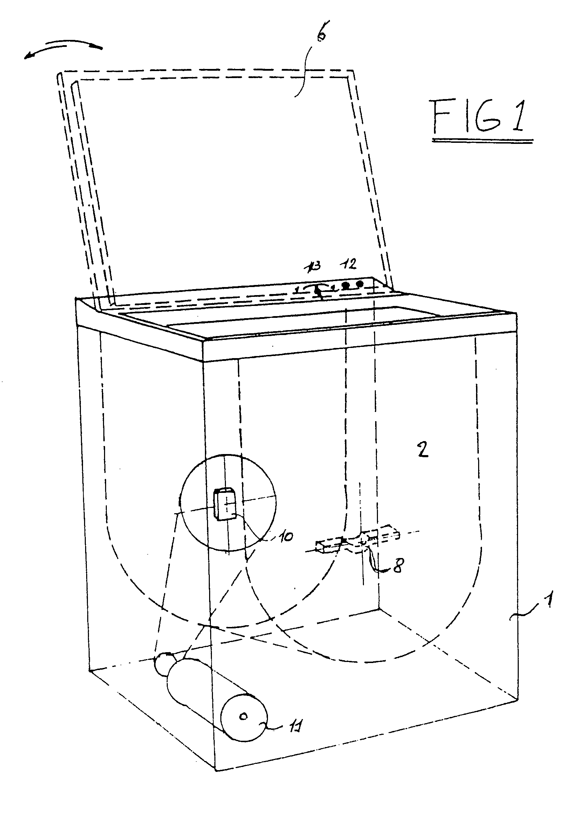

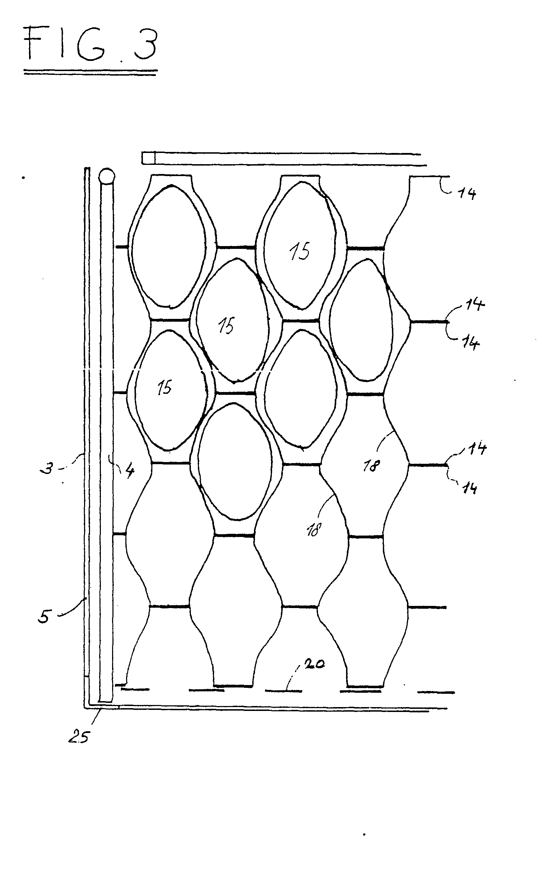

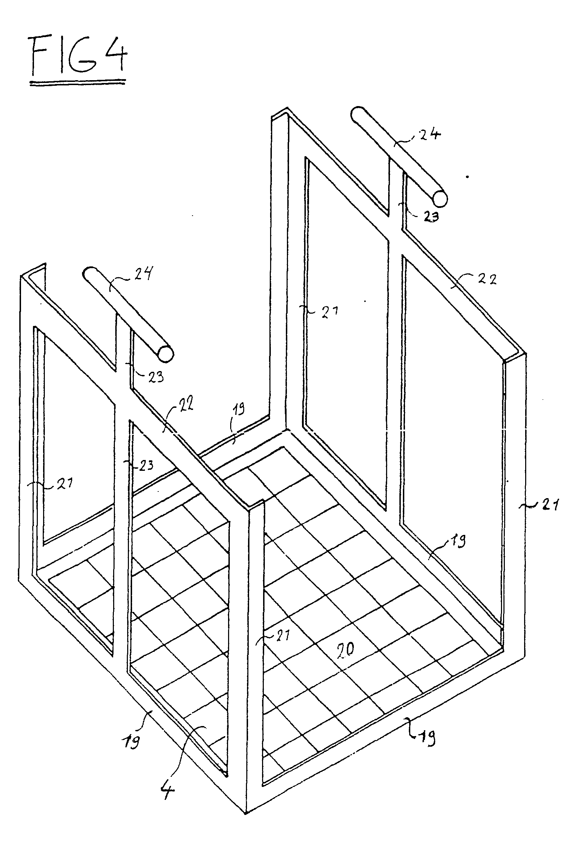

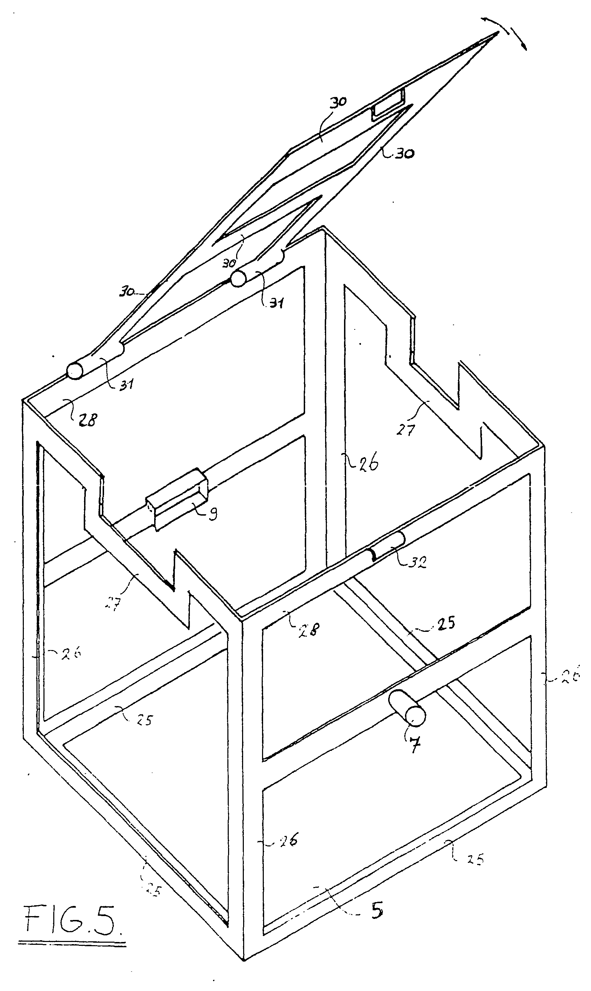

The automatic apparatus represented in Fig. 1 comprises the house 1 with the washing drum 2 in it, in which the device 3 (see Fig. 3) can be positioned, consisting of an inner frame 4 (see Fig. 4) and an outer frame 5 (see Fig. 5). To that end the lid 6 should be opened far enough. The outer frame 5 (see Fig. 5) rests with the trunnion 7 in the support 8 on one of the inner walls of the washing drum and with an engaging means 9 in the groove of a rotating disk 10 on the opposing inner wall of the washing drum 2. The rotating disk 10 is driven by a motor 11. The control device 12 of the washing apparatus consists of various button-switches. The various signals may be light signals 13.

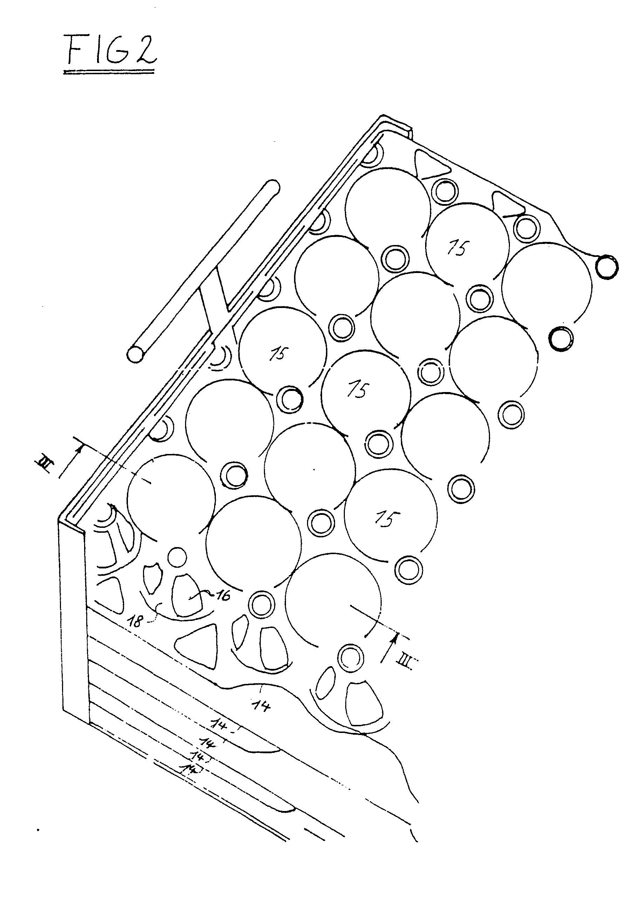

In Fig. 2 the eggs 15 have been placed on the platforms 14. In a platform 14 are sufficient openings 16 for through-flow. The platforms 14 rest on each other with the ridges 17 and the perforated protrusions 18, so that the eggs can still move somewhat and so have no supporting function.

It will be seen from Fig. 3 that from two successive platforms 14 the protrusions 18 are staggered by turning the platforms each time over an angle of 90° in such a way that the subsequent row of eggs 15 are comprised between the row of eggs therebelow. This provides advantages with respect to the height of the stacking. So with the platforms as described it is possible to stack six platforms 14 each with thirty eggs 15, thus allowing to treat 6 x 30 = 180 eggs in one washing cycle. Depending on the dimensions of the platforms to be used a smaller or larger number of eggs may be treated in one cycle. The dimensions of the washing apparatus may be adapted accordingly without departing from the inventive concept.

In Fig. 4 the inner frame 4 is represented in a perspective view. The inner frame 4 has an open bottom plane the edges of which consists of angle steels 19, between which wicker-work 20 of wire has been positioned. Also strips can be positioned appropriately in correspondence with the platforms. The edges 21 for guiding the egg platforms 14 may also consist of angle steels or bent plates. The upper ends of the edges 21 are connected with each other by a strip 22. A handle 24 is mounted to an upwardly extending strip 23. It is also possible to elongate the edges 21 and to provide the strip 22 between the ends, said strip being rounded off at the location of the handle. The inner frame 4 of Fig. 4 slides with some play in the outer frame 5 of Fig. 5.

In Fig. 5 the bottom edges 25 and the upright edges 26 may consist as well of angle steels. At the upper end these upright edges 26 are connected with each other by the sections 27, 28. The sections 27 are shaped in such a way, that the handles 24 of the inner frame 4 can easily be grasped when positioning the inner frame 4 into the outer frame 5. The trunnion 7 has been discussed already with Fig. 1. The engaging means is formed by a housing 9 which is open at the bottom side and can be closed off with a strip with bolts and is provided with a boundary plate at the inner side of the outer frame in order to keep the outer frame free from the drum of the washing machine during the washing treatment. The trunnion 7 and the housing 9 serve for positioning the device in the washing drum 2. The outer frame 5 can be closed off with an open lid consisting of suitable sections, such as for example square tube sections 30. The lid may turn for example around the one edge 28 by means of hinges 31 and be connected with the other edge 28 by means of a snap lock 32.

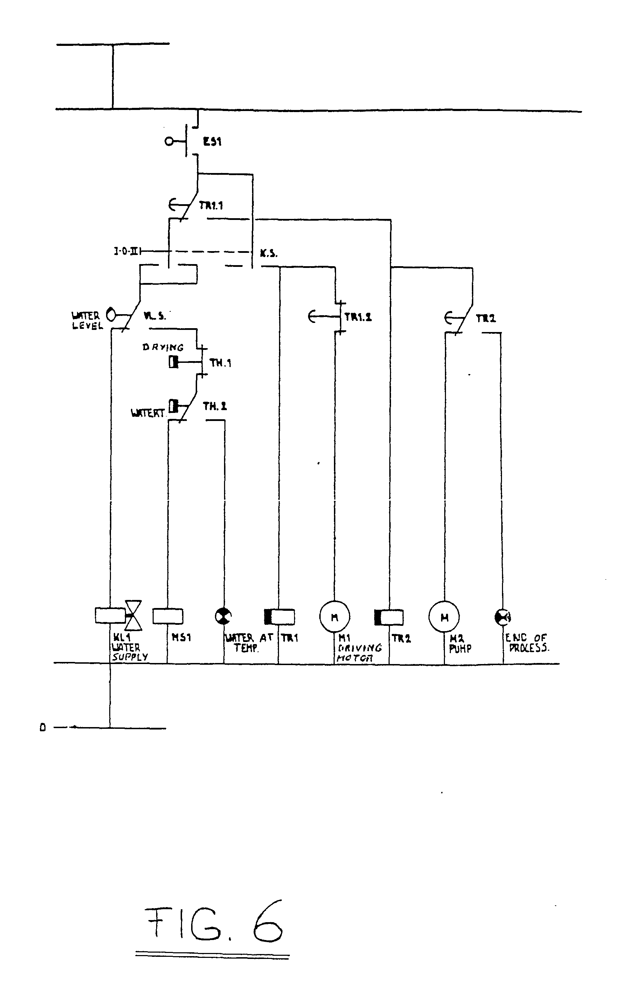

A possible control diagram for the automatic washing apparatus is represented in Fig. 6.

## Claim

1. A method for operating an apparatus for washing eggs, with which the egg shells are stripped as much as possible of dirt contaminated with infection causing bacteria, indicated with the so-called germination number, said apparatus comprising a washing drum (2), an open device (4, 5) into which the eggs (15) to be washed are positioned, means for supplying washing liquid to said drum (2), for removing said liquid out of it and for heating said washing liquid, said open, eggs (15) containing, device (4, 5) being rotatably supported in said drum (2) and means (9, 10, 11) being present for rotating said device (4, 5),

characterized in

that after washing of the eggs (15) and removing the liquid out of said washing drum (2) the open, eggs (15) containing, device (4, 5) is continued to rotate for another 1 to 2 minutes for drying the eggs (15).

## Patentanspruch

Verfahren zum Betrieb eines Apparats zum Waschen von Eiern, mit dem die Eierschalen so viel wie möglich von Schmutz mit Infektion verursachenden Bakterien, angegeben mit der sogenannten Keimzahl, befreit werden, welcher Apparat eine Waschtrommel (2), eine offene Vorrichtung (4, 5), in welche die zu waschenden Eier (15) gelegt werden, Mittel zum Zuführen von Waschflüssigkeit zu der genannten Trommel (2), zum Entfernen der genannten Flüssigkeit daraus und zum Erwärmen der genannten Waschflüssigkeit enthält, wobei die genannte offene, Eier (15) enthaltende Vorrichtung (4, 5) in der genannten Trommel (2) drehbar unterstützt wird und Mittel (9, 10, 11) zum Rotieren der genannten Vorrichtung (4, 5) vorgesehen sind,

dadurch gekennzeichnet,

dass nach dem Waschen der Eier (15) und der Entfernung der Flüssigkeit aus der Waschtrommel (2) die offene, Eier (15) enthaltende Vorrichtung (4, 5) noch 1-2 Minuten zu drehen fortfährt um die Eier (15) zu trocknen.

## Revendication

1. Procédé pour le fonctionnement d'un appareil destiné au lavage des oeufs, dans lequel on enlève autant que possible les impuretés situées sur les coquilles d'oeufs contaminées par des bactéries infectieuses, signalées par l'indice de germination, cet appareil comprenant un tambour de lavage (2), un dispositif ouvert (4, 5) dans lequel sont positionnés les oeufs (15) à nettoyer, des moyens pour le liquide de lavage au tambour (2), évacuer le liquide hors de celui-ci et chauffer le liquide de lavage, ce dispositif ouvert (4, 5) contenant les oeufs (15) étant supporté de façon rotative dans le tambour (2), et des moyens (9, 10, 11) étant prévus pour mettre le dispositif (4, 5) en rotation,

caractérisé en ce que,

après le nettoyage des oeufs (15) et l'évacuation du liquide hors du tambour de lavage (2), le dispositif ouvert (4, 5) contenant les oeufs (15) poursuit sa rotation pendant 1 à 2 minutes supplémentaires pour le séchage des oeufs (15).

FIG 1

FIG2

# FIG.3

# FIG 4

FIG.5.

FIG. 6